(19) Europäisches Patentamt
European Patent Office
Office européen des brevets

(11) **EP 4 761 121 A1**

(12) **EUROPEAN PATENT APPLICATION**

(43) Date of publication:
**17.06.2026  Bulletin 2026/25**

(21) Application number: **24307093.5**

(22) Date of filing: **12.12.2024**

(51) International Patent Classification (IPC):
**H04B 1/04** (2006.01)       **G06N 3/048** (2023.01)
**G06N 3/084** (2023.01)      **H04B 7/06** (2006.01)
**H04L 25/02** (2006.01)

(52) Cooperative Patent Classification (CPC):
**H04B 1/04; G06N 3/045; G06N 3/048; G06N 3/084; H04B 7/0617; H04L 25/0254**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Commissariat à l'Energie Atomique et aux Energies Alternatives
75015 Paris (FR)**

(72) Inventors:
• **MABROUK, Asma**
  **38054 GRENOBLE Cedex 09 (FR)**
• **ZAYANI, Rafik**
  **38054 GRENOBLE Cedex 09 (FR)**

(74) Representative: **Atout PI Laplace
Immeuble Up On
25 Boulevard Romain Rolland
CS 40072
75685 Paris Cedex 14 (FR)**

(54) **A SIM-ENABLED WIRELESS TRANSMITTER AND COMMUNICATION SYSTEM USING UNSUPERVISED ONLINE LEARNING**

(57)    There is provided a SIM-enabled transmitter (2) comprising a base station (2), Stacked Intelligent Metasurfaces, SIM (25) and a controller for jointly control the phase shifts of the electromagnetic waves passing through the meta-atoms of the SIM layers and the power allocated to each user equipment, using an unsupervised online dual-task deep-learning neural network (6). In response to the determination of an online channel estimation by the neural network, the transmitter implements iterations, each iteration comprising a forward propagation pass (504), a determination of a loss function (505), and a backpropagation pass (506). In the forward propagation pass (504), the online input data received by the neural network is passed through the successive hidden layers (601) of the neural network (6) using the current weights of the neural network (6), until arriving to a dual-task output layer that determines in parallel a predicted phase shift vector and a predicted power allocation vector, using the output of the last hidden layer.

FIGURE 3

EP 4 761 121 A1

Description

TECHNICAL FIELD

The invention generally relates to digital communications and in particular to methods and devices for Stacked Intelligent Metasurfaces (SIM)-enabled wireless transmission.

BACKGROUND

The rapid advancement of wireless communication technologies has been driven by an insatiable demand for higher data rates, improved connectivity, and enhanced efficiency.

Massive Multiple Input Multiple Output (MIMO) systems marked a significant leap forward, utilizing large antenna arrays to boost network capacity and spectral efficiency through spatial multiplexing. However, the complexity and power demands of massive MIMO highlighted the need for further developments. In this context, Reconfigurable Intelligent Surfaces (RIS) emerged as a promising solution, offering dynamic control over electromagnetic waves to improve signal propagation and network performance. However, RIS technologies face challenges in scalability and operational complexity.

Another technology called Stacked Intelligent Metasurfaces (SIM) has then emerged to achieve superior wave-domain processing. SIM integrates multiple layers of sub-wavelength scattering elements. SIM technology enables control over electromagnetic waves and in particular precise control over wavefront shaping and propagation, which facilitates advanced functionalities like multidimensional beamforming, interference management, and spatial multiplexing. Further, by leveraging multiple stacked reconfigurable intelligent surfaces, SIM enable precise control over electromagnetic waves in the wave domain, paving the way for enhanced performance, flexibility, and reliability in wireless communication applications. Indeed, SIMs offer a promising wave-based computing paradigm for next-generation wireless networks, enabling synergistic applications spanning communications, sensing, signal processing, and beyond. Moreover, SIMs can be integrated into the transceiver architecture of wireless terrestrial and non-terrestrial systems, enabling efficient wavebased signal processing tasks like MIMO precoding/combining, thereby reducing RF-related energy consumption and processing delays.

Previous work on SIM primarily focused on single-layer metasurfaces, which lacked the ability to effectively mitigate multi-user (MU) interference.

In the field of cell-free networks, an approach has been proposed for the deployment of SIM for Holographic MIMO (HMIMO) Aided cell-free networks, as disclosed in Qingchao Li, Mohammed El-Hajjar, Chao Xu, Jiancheng An, Chau Yuen, and Lajos Hanzo. Stacked

intelligent metasurfaces for holographic mimo aided cell-free networks. IEEE Transactions on Communications, pages 1-1, 2024. Other approaches delved into optimizing achievable rates in HMIMO communications through SIM, emphasizing the potential for enhanced performance as disclosed for example in Anastasios Papazafeiropoulos, Jiancheng An, Pandelis Kourtessis, Tharmalingam Ratnarajah, and Symeon Chatzinotas. Achievable rate optimization for stacked intelligent metasurface-assisted holographic mimo communications. arXiv preprint arXiv:2402.16415, 2024..

It has been also proposed to integrate SIM into MIMO transceiver design, to show its adaptability and efficiency in improving system performance, in Jiancheng An, Chau Yuen, Chao Xu, Hongbin Li, Derrick Wing Kwan Ng, Marco Di Renzo, Merouane Debbah, and Lajos Hanzo. Stacked intelligent metasurface-aided mimo transceiver design. IEEE Wireless Communications, pages 1-9, 2024.

In other applications beyond terrestrial networks, the use of SIM has been extended to Low Earth Orbit (LEO) satellite communications, leveraging statistical Channel State Information (CSI) for enhanced connectivity, as described in Shining Lin, Jiancheng An, Lu Gan, Mérouane Debbah, and Chau Yuen. Stacked intelligent metasurface enabled LEO satellite communications relying on statistical csi. IEEE Wireless Communications Letters, 13(5):1295-299, 2024.

SIM has further demonstrated its prowess in beamforming and radiation pattern control, as disclosed in Naveed UI Hassan, Jiancheng An, Marco Di Renzo, Mérouane Debbah, and Chau Yuen. Efficient beamforming and radiation pattern control using stacked intelligent metasurfaces. IEEE Open Journal of the Communications Society, 5:599-611, 2024.

In the wave domain, SIM has facilitated MUbeamforming, highlighting its versatility in managing complex signal environments (Jiancheng An, Marco Di Renzo, Mérouane Debbah, and Chau Yuen. Stacked intelligent metasurfaces for multiuser beamforming in the wave domain. In ICC 20203 - IEEE International Conference on Communications, pages 2834-2839, 2023.

Looking ahead to 6G networks, SIM continues to be a focal point for research, with efforts directed towards efficient HMIMO communications (Jiancheng An, Chao Xu, Derrick Wing Kwan Ng, George C. Alexandropoulos, Chongwen Huang, Chau Yuen, and Lajos Hanzo. Stacked intelligent metasurfaces for efficient holographic mimo communications in 6g. IEEE Journal on Selected Areas in Communications, 41 (8):2380-2396, 2023.

Despite these advances in the field of SIM, there remains a need for a SIM-aided wireless communication system capable of providing a maximized overall performance

suitable for highly efficient, adaptable, and scalable current and next-generation wireless networks.

**SUMMARY**

To address these and other problems, there is provided a transmitter comprising a base station equipped with a plurality of antennas configured to transmit a signal to a number of user equipments, each comprising at least one antenna, wherein the transmitter further comprises Stacked Intelligent Metasurfaces, SIM. The transmitter comprises a controller configured to jointly control the phase shifts of electromagnetic waves passing through meta-atoms of the SIM and the power allocated by the base station to each user equipment, using an online dual-task deep-learning neural network. The controller is configured to implement one or more iterations, each iteration comprising a forward propagation pass and a backpropagation pass. In the forward propagation pass, input data corresponding to an online channel estimation related to the state of the channels between each user equipment and the base station is passed through successive hidden layers of the neural network using current weights and an activation function associated with each hidden layer of the neural network, until the output of the last hidden layer is transmitted to a dual-task output layer comprising a first output sub-layer and a second output sub-layer. The first output sub-layer is configured to determine a predicted phase shift vector, in response to the receipt of the output of the last hidden layer, and the second output sub-layer is configured to determine a predicted power allocation vector, in response to the receipt of the output of the last hidden layer, in parallel to the first output sub-layer. The transmitter is further configured to determine of a loss function from the predicted vectors determined by the first output sub-layer and the second output sub-layer, the backward propagation pass comprising an application of a descent gradient algorithm using calculated gradients of the loss function to update the weights of the neural network model. The controller is configured to apply a phase shift vector to the SIM meta-atoms using the predicted phase shift vector determined at the last iteration, and to control the power allocated by the base station to each user equipment using the predicted power allocation vector determined at the last iteration.

In some aspects, each layer of the neural network may comprise a set of connected neurons and may be associated with an activation function, and, in each forward propagation pass of a given iteration corresponding to a current set of weights and channel estimation input data, each hidden layer may be configured to:

- receive the output data of the previous layer as the input data of the hidden layer;

- determine the weighted sum of the received input data and biases for each neuron of the hidden layer using the weights, among the current set of weights, that are associated with the connections of the neuron.

- apply the activation function associated with the layer or sub-layer to the determined weighted sum.

The first output sub-layer of the neural network may comprise a set of connected neurons and may be associated with an activation function, the first output sub-layer being configured to:

- receive the output data of the last hidden layer as input data;

- calculate the weighted sum of the received input data and biases for each neuron of the first output sub-layer using the weights, among the current set of weights, that are associated with the connections of the neurons of the first output sub-layer;

- apply the activation function associated with the first output sub-layer, which provides a predicted power allocation vector $p = \{p_1, \ldots, p_k\}$ such that the sum of the component of the power allocation vector is inferior or equal to the total power constraint $P_T$ at the base station, each component of the predicted power allocation vector $p = (p_1, \ldots, p_k\}$ corresponding to a user equipment.

The activation function associated with the first output sub-layer may be the softmax function.

The number of neurons of the first output sub-layer may be equal to the number of components of the power vector, the output of each neuron of the first output sub-layer corresponding to one of the component of the predicted power allocation vector p.

The second output sub-layer of the neural network may comprise a set of connected neurons and may be associated with an activation function, the second output sub-layer being configured to:

- receive the output data of the last hidden layer as input data;

- determine the weighted sum of the received input data and biases for each neuron of the second output sub-layer using the weights, among the current set of weights, that are associated with the connections of the neuron;

- apply an activation function associated with the second output sub-layer, which provides a predicted continuous phase shift vector.

The second output sub-layer may be further configured to apply a quantization operation to the predicted continuous phase shift vector, using quantized bits, which provides a predicted quantized phase shift vector $\varphi = \{\theta_1, \dots, \theta_{LN}\}$.

In some embodiments, the activation function associated with the second output sub-layer may be the sigmoid function.

In some aspects, the SIM may comprise a plurality of metasurface layers, each metasurface layer comprising a plurality of meta-atoms, and he number of neurons of the second output sub-layer may be equal to the number LN of components of the phase shift vector $\varphi = \{\theta_1, \dots, \theta_{LN}\}$, with L being the number of metasurface layers of the SIM and N being the number of meta-atoms of each metasurface layer, the output of each neuron of the second output sub-layer corresponding to one of the meta-atom of the SIM.

Advantageously, the loss function may represent a balance between maximizing the sum rate and maximizing the minimum rate across all user equipments, the balance being defined by a balance parameter ($\alpha$).

The sum rate may be defined by the term $\sum_{k=1}^{K} \log_2(1 + \gamma_k)$ and the minimum rate across all user equipments may be defined by the term $\min_k \log_2(1 + \gamma_k)$, where $\gamma_k$ represents the signal-to-interference-plus-noise-ratio (SINR) at the k-th user equipment, and depends on the predicted vectors determined by the first output sub-layer and the second output sub-layer.

In some embodiments, the loss function may be defined as:

$$\mathcal{L} = -\alpha \sum_{k=1}^{K} \log_2(1 + \gamma_k) - (1 - \alpha) \min_k (\log_2(1 + \gamma_k)),$$

where the index *k* corresponds to the k-th user equipment, the term $\sum_{k=1}^{K} \log_2(1 + \gamma_k)$ corresponds to the sum rate and the term $\min_k \log_2(1 + \gamma_k)$ corresponds the minimum rate, and $\gamma_k$ is the signal-to-interference-plus-noise-ratio (SINR) at the k-th user equipment.

The descent gradient algorithm may be a stochastic descent gradient algorithm, such as ADAM algorithm.

In some embodiments, in response to the determination of the loss function, the current weights of the neural network may be stored, if it is determined that they correspond to the minimum loss function.

In some aspects, the iterations may comprise a set of online training iterations that are terminated in response to the verification of a termination condition, and in response to the termination of the training iterations, the neural network may be configured to:

- download the stored weights corresponding to the minimum loss, and
- perform an additional iteration, corresponding to a pseudo inference phase, by using the downloaded stored weights as the current weights of the neural network.

The termination condition may be satisfied if a predetermined or predefined maximum number of iterations is reached.

There is further provided a method for transmitting a signal from a base station equipped with a plurality of antennas to a number of user equipments, using Stacked Intelligent Metasurfaces, SIM, the method comprising jointly controlling the phase shifts of electromagnetic waves passing through meta-atoms of the SIM (25) and the power allocated by the base station (20) to each user equipment (3), using an online dual-task deep-learning neural network, the method comprising one or more iterations, each iteration comprising a forward propagation pass and a backpropagation pass. In the forward propagation pass, the method comprises passing input data corresponding to an online channel estimation related to the state of the channels between each user equipment and the base station through successive hidden layers of the neural network using current weights and an activation function associated with each hidden layer of the neural network, until the output of the last hidden layer is transmitted to a dual-task output layer. The method comprises determining, in parallel, at a dual-task output layer, a first output comprising a predicted phase shift vector and a second output comprising a predicted power allocation vector, in response to the receipt of the output of the last hidden layer. The method comprises determining a loss function from the two predicted vectors determined by the dual-task output layer. In the backward propagation pass, the method comprises applying a descent gradient algorithm using calculated gradients of the determined loss function to update the weights of the neural network model. The joint control step comprises applying a phase shift vector to the SIM meta-atoms using the predicted phase shift vector determined at the last iteration, and controlling the power allocated by the base station to each user equipment using the predicted power allocation vector determined at the last iteration.

Advantageously, the embodiments of the invention provide an online unsupervised method and system capable of optimizing multi-user beamforming in SIM-assisted communication systems. They exploit the transformative potential of SIM-enabled wave-domain processing and set the stage for highly efficient, adaptable, and scalable next-generation wireless networks.

The embodiments of the disclosure enable jointly optimizing the phase shifts applied to the SIM and the power allocated by the base station to the user equipments, using an online unsupervised dual-task deep learning neural network, thereby maximizing the overall system performance. Due to the online optimization nature and meaningful network

parameters, the embodiments of the disclosure own strong generalization ability and interpretability, with a superior performance. The objective loss function used by the neural network architecture is adapted to strike a balance between maximizing the sum rate and ensuring a fair distribution of resources by considering the minimum rate per user. The use of such loss function enables a tradeoff between achieving high aggregate data rates and maintaining acceptable quality of service for individual users.

Further advantages of the present invention will become clear to the skilled person upon examination of the drawings and the detailed description.

**BRIEF DESCRIPTION OF THE DRAWINGS**

The accompanying drawings, which are incorporated in and constitute a part of this specification, illustrate various embodiments of the invention.

Figure 1 depicts a SIM-aided communication system, comprising a SIM being deployed to assist the downlink communication from a transmitter to K receivers, according to some embodiments.

Figure 2 illustrates the transmission of a signal from the base station of the transmitter to the last metasurface layer, through the intermediate metasurface layers, according to some embodiments.

Figure 3 depicts the dual-task neural network architecture, according to some embodiments.

Figure 4 is a flowchart illustrating the method for joint controlling the power allocation at the base station and the phase shifts imposed to the SIM, according to some embodiments.

Figure 5 is a flowchart representing the operation of the unsupervised and online dual-task deep-learning neural network in response to received input data, according to some embodiments.

Figure 6 illustrates the Loss convergence behavior for a continuous phase shifts case, according to an exemplary embodiment.

Figure 7 illustrates the Loss convergence behavior for a discrete phase shifts case, according to an exemplary embodiment.

Figure 8 illustrates an exemplary SIM-assisted communication system, represented in a referential.

Figure 9 represents the average sum rate versus $\alpha$ obtained for an exemplary embodiment.

Figure 10 illustrates the impact of channel estimation error, $\sigma_e^2$ on the average Downlink sum rate for different values of $\alpha$, obtained for an exemplary embodiment.

Figure 11 represents the cumulative distribution function (CDF) of the Downlink rate per user for different values of $\alpha$, obtained for an exemplary embodiment.

Figure 12 shows the relationship between the average DL sum rate (in bps/Hz) and the number L of metasurface layers in the SIM, obtained for an exemplary embodiment.

Figure 13 depicts the average DL sum rate versus the number of quantization bits obtained for an exemplary embodiment.

## DETAILED DESCRIPTION

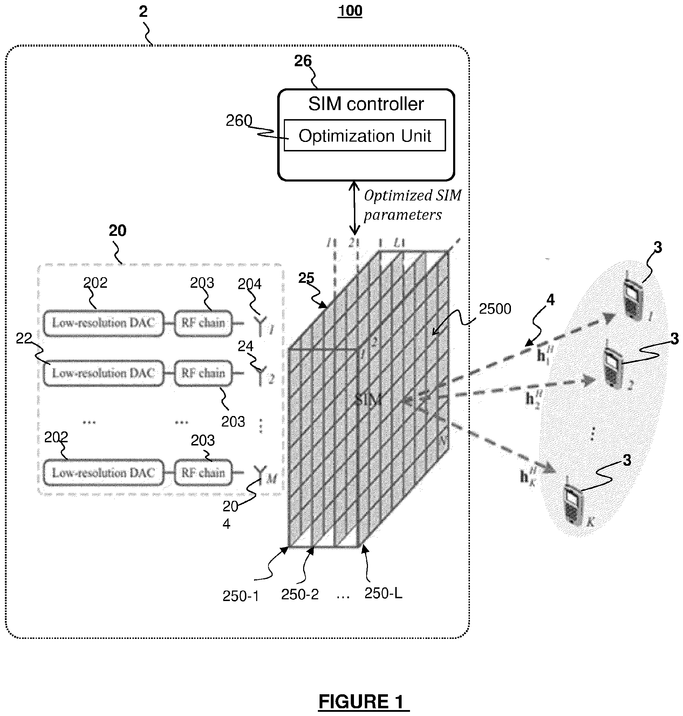

Figure 1 depicts an exemplary SIM-aided multiuser wireless communication system 100, in which embodiments of the invention may be implemented.

The SIM-aided multiuser wireless communication system 100 comprises a SIM-aided transmitter 2 configured to transmit a signal to $K$ User Equipments (UEs).

Stacked Intelligent Metasurfaces (SIMs) are used to manipulate electromagnetic waves propagating through free space or open environments, in the wireless communication, so as to improve for example the signal strength, the extending range, and/or mitigating multipath fading.

The transmitter 2 comprises a base station BS 20 equipped with a plurality of M antennas 204 and Stacked Intelligent Metasurfaces (SIM) 25 being deployed to assist the downlink communication from the base station 20 to the $K$ User Equipments 3.

Although a User Equipment 3 will also referred to herein as a receiver device or a receiver to facilitate the understanding of the present disclosure related to the downlink communication between the base station 20 and the User Equipments 3 (acting as receivers), each user equipment 3 is implemented as a wireless user device capable of both transmitting and receiving data.

Therefore, a User Equipment 3 will be also referred to hereinafter as a 'receiver' or a 'receiver device'.

A User Equipment may be, without limitation, a mobile phone, a computer, a laptop, a tablet, a drone, an IoT device etc.

Similarly, although the downlink direction will be mainly considered between the base station 20 and the User Equipments 3, the base station 20 is also adapted to receive signals from the User Equipments in the uplink direction.

The base station 20 may comprise in association with each transmit antenna 204, a Digital-to-Analog converter (DAC) 202, such as a low resolution DAC, and a RF chain 203. A DAC 202 is configured to perform Digital-to-Analog conversion. The Digital-to-Analog conversion refers to the process of transforming digital signals (discrete-time, finite-bit representation) into analog signals. The analog-to-digital conversion may use for example sampling to map a continuous-time signal into discrete-time and quantization to represent the continuous-amplitude quantities using a finite number of bits. The RF chain 203 is a cascade of electronic components and sub-units which may include amplifiers, filters, mixers, attenuators and detectors.

The SIM 25 comprises $L$ metasurface layers 250 (also referred to individually as metasurface layers 250-$i$ with $i$ ranging from 1 to $L$), with each metasurface layer 250 comprising $N$ meta-atoms 2500 (also referred to individually as meta-atoms 2500$_{ln}$ for each metasurface layer $l$ with $n$ ranging from 1 to $N$). In figure 1, the metasurface layers are represented as parallel rectangular plates, while the meta-atoms are represented in the form of aligned squares in each metasurface layer.

The transmitter further comprises a controller 26 configured to jointly control phase shifts imposed to the meta-atoms of the SIM 25 and the power allocated to the user equipments 3 by the base station. The controller 26 (also called 'meta controller') is configured to control the phase shifts onto the electromagnetic (EM) waves transmitted through each meta-atom 2500, the phase shift being independent and adjustable. By properly adjusting the phase shifts in each metasurface 250 the SIM 25 implements a downlink beamforming directly in the EM wave domain.

The controller 26 may independently adjust the phase shifts of the electromagnetic (EM) waves passing through each meta-atom 2500. A meta-atom 2500 is characterized by its ability to modify the amplitude and phase of incident electromagnetic (EM) waves.

The base station comprises a plurality of antennas 204 while a receiver 3, adapted to exchange with the transmitter 2, comprises at least one antenna. The communication system 100 may be for example a MIMO (multiple-input and multiple-output) communication system or a MISO (multiple-input and single-output) communication system.

In the following description of some embodiments, it will be considered that the communication system 100 is a MISO system with the base station 20 comprising a plurality of antenna 204 and the user 3 being a user equipment comprising a single antenna, for illustration purpose only. The skilled person will readily understand that the disclosure applies to a MIMO system.

In the downlink, the transmitter 2 is configured to transmit a signal comprising a plurality of information symbols through a communication channel 4 to at least one receiver 3. A receiver 3 is configured to receive the signal transmitted by the transmitter 2. The communication channel 4 may be represented by a quasi-static flat-fading channel model. According to this model, the communication channel 4 comprises a set of $K$ baseband equivalent channels, each baseband equivalent channel being from the last metasurface layer 250-$L$ of the SIM to a $k$-th receiver 3 among the $K$ receivers 3. The notation $h_k^H$ will be used to denote the baseband equivalent channel from the last metasurface layer 250-$L$ of the SIM to the $k$-th user equipment 3, with $h_k^H \in \mathbb{C}^{1 \times N}$, $\forall k$ such that $1 \leq k \leq K$.

The SIM-aided communication system 100 (also called SIM-assisted or SIM-enabled communication system), according to the embodiments of the disclosure, advantageously leverages a neural network to jointly optimize the phases of the electromagnetic (EM) waves passing through the SIM 25 and the power allocation at the base station 20, i.e. the power allocated by the base station 20 to each one of the K user equipments 3.

To facilitate the understanding of the invention, the following notations and definitions are introduced.

In the following description, the index $l \in \{1, 2, \cdots, L\}$ will be used to denote the index of the metasurface layers 250, the index $n \in \{1, 2, \cdots, N\}$ will be used to denote the index of the set of meta-atoms 2500 in each metasurface layer 250, and the index $k \in \{1, 2, \cdots, K\}$ will be used to denote the set of receivers 3. The index $m \in \{1, 2, \cdots, M\}$ will be used to denote the index of the transmit antenna 204 at the base station 20.

The complex transmission coefficient of the $n$-th meta-atom in the $l$-th layer is represented as:

$$\alpha_n^l e^{j\theta_n^l}, \forall n \in \{1, 2, \cdots, N\}, \forall l \in \{1, 2, \cdots, L\} \quad (1)$$

In the formula (1) of the complex transmission coefficient, the term $\alpha_n^l \in [0,1]$ denotes the amplitude and the term $\theta_n^l \in [0, 2\pi)$ denotes the phase shift imposed by the $n$-th meta-atom $2500_{ln}$ in the $l$-th metasurface layer 250-$l$.

The diagonal phase shift matrix $\Phi^l$ of the $l$-th metasurface layer 250-$l$ is then defined as:

$$\Phi^l = diag\left(e^{j\theta_1^l}, e^{j\theta_2^l}, \ldots, e^{j\theta_N^l}\right) \in \mathbb{C}^{N \times N}, \forall l \in \{1, 2, \cdots, L\} \quad (2)$$

To facilitate the understanding of the following description of some embodiments of the disclosure which relates to the joint control of the phase shifts for wave-based

beamforming and of the power allocated to the K user equipments at the base station, it will be assumed that the amplitude of all meta-atoms 2500 is set to 1.

Further, as in real-world implementation scenarios, the phase shift of each meta-atom 2500 is generally constrained to a finite set of discrete values, it will be assumed that this discrete set of phase shifts is obtained by uniformly dividing the interval [0, $2\pi$) into $2^q$ levels, where q represents the number of control bits.

Consequently, the set of phase shift values, denoted as $\mathcal{B}$ will be defined herein as:

$$\mathcal{B} = \{0, \Delta_\theta, 2\Delta_\theta, \ldots, (2^q - 1)\Delta_\theta\} \quad (3)$$

In formula (3), $\Delta_\theta$ denotes the phase shift resolution and is defined as:

$$\Delta_\theta = \frac{2\pi}{2^q} \quad (4)$$

The notation $\mathbf{W}^l \in \mathbb{C}^{N \times N}$, $\forall l$ such that $1 < l \leq L$, will be used to denote the transmission matrix from the ($l$ - 1)-th metasurface layer 250-($l$ - 1) to the $l$-th metasurface layer 250-$l$ and the notation $w_m^1 \in \mathbb{C}^{N \times 1}$ will be used to denote the transmission vector from the m-th transmit antenna 204-m of the base station to the first metasurface layer 250-1 of the SIM 25.

The transmission matrix $\mathbf{W}^l$ describes how the electromagnetic (EM) wave is transformed as it passes from the ($l$-1)-th layer to the next $l$-th layer.

According to the Rayleigh-Sommerfeld diffraction theory (as presented in "Xing Lin, Yair Rivenson, Nezih T. Yardimci, Muhammed Veli, Yi Luo, Mona Jarrahi, and Aydogan Ozcan. All-optical machine learning using diffractive deep neural networks. Science, 361(6406):1004 - 1008, 2018), the ($n$ - $n$')-th element $w_{n,n}^l$, of the transmission matrix $W^l$ is given by:

$$w_{n,n\prime}^l = \frac{d_x d_y \cos \chi_{n,n\prime}^l}{d_{n,n\prime}^l}\left(\frac{1}{2\pi d_{n,n\prime}^l} - j\frac{1}{\lambda}\right)e^{j\frac{2\pi d_{n,n\prime}^l}{\lambda}}, \forall 1 < l \leq L \quad (5)$$

In formula (5), $\lambda$ denotes the wavelength, $d_{n,n}^l$, denotes the transmission distance, $\chi_{n,n}^l$, represents the angle between the propagation direction and the normal direction of the ($l$ - 1)-th metasurface layer, and $d_x \times d_y$ is the size of each meta-atom 2500.

More specifically, the distance $d_{n,n}^{l}$, denotes the distance between the *n*-th meta-atom of the (*l* - 1)-th metasurface layer 250-(*l* - 1) and the *n'*-th meta-atom of the *l*-th metasurface layer 250-1.

The *n*-th entry of $\mathbf{w}_m^1$ is obtained similarly to formula (5).

The SIM-enabled wave-based beamforming matrix **G** is then given by:

$$\text{G} = \Phi^L W^L \Phi^{L-1} \dots \Phi^2 W^2 \Phi^1 \ \epsilon \ \mathbb{C}^{N \times N} \qquad (6)$$

It should be noted that in practical implementations, a SIM 25 is generally enclosed within a metallic support structure coated with wave-absorbing material. Consequently, diffraction effects between non-adjacent metasurfaces 250 are considered negligible and are not considered in equation (6).

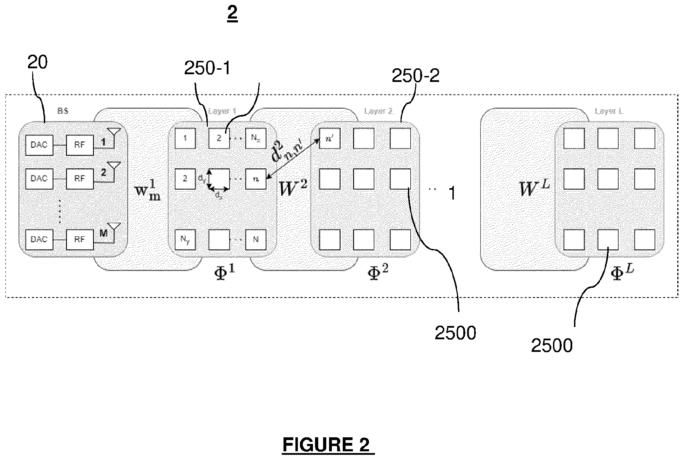

Figure 2 illustrates the transmission of a signal from the base station 20 to the last metasurface layer 250-*L* of the SIM 25, through the intermediate metasurface layers 250-i from *i* = 1 to *i* = *L* - 1.

Figure 2 represents:

- the inter-layer transmission represented by the transmission matrices $W^l$ from the (*l* - 1)-th metasurface layer 250-(*l* - 1) to the *l*-th metasurface layer 250-*l*, with *l* = 2 to *l* = *L*;

- the transmission between each m-th transmit antenna 204-*m* of the base station 20 and the first metasurface layer 250-1 of the SIM 25, represented by the transmission vector $w_m^1$ with *m* = 1 to *m* = *M*; and

- the distance $d_{n,n}^{l}$, between the *n*-th meta-atom of the (*l* - 1)-th metasurface layer 250-(*l* - 1) and the *n'*-th meta-atom of the (*l*)-th metasurface layer 250-(*l*). In figure 2, only the distance $d_{n,n}^{2}$, is represented for the sake of simplicity of the figure (distance $d_{n,n}^{2}$, between the *n*-th meta-atom of the first metasurface layer 250-1 and the *n'*-th meta-atom of the second metasurface layer 250-2.

Each baseband equivalent channels $h_k^H$ ($\forall k$ such that $1 \leq k \leq K$) from the last metasurface layer 250-*L* of the SIM to each *k*-th receiver 3 among the *K* receivers 3. The $\forall k$ such that $1 \leq k \leq K$) may be modelled as a correlated Rayleigh fading channel $h_k$ $h_k \sim \mathcal{CN}$ (0, $\beta_k R$) $\forall k$ such that $1 \leq k \leq K$, with $\beta_k$ representing the distance-dependent path loss of the *k*-th SIM-user link, and $R \ \epsilon \ \mathbb{C}^{N \times N}$ is the covariance matrix characterizing the spatial correlation between different meta-atoms 2500.

Considering that the environment in which the communication system 100 operates is an isotropic scattering environment characterized by uniformly distributed multipath components, the (n, n')-th element of covariance matrix **R** can be represented as:

$$R_{n,n\prime} = \ sinc \ (2d_{n,n\prime}) \qquad (7)$$

In equation (7), $d_{n,n'}$ denotes the distance (or 'spacing') between the meta-atoms corresponding to the (n, n')-th element of the covariance matrix **R**.

While traditional digital precoding allocates a distinct beamforming vector to each symbol, the communication system 100 according to the embodiment of the disclosure uses wavebased beamforming supported by the SIM 25, wherein each data stream is transmitted directly from its corresponding antenna 204 at the base station 20. The base station 20 is therefore configured to pre-select a set of *K* appropriate antennas 204 from the total of *M* antennas 204 of the base station 20. For the sake of simplicity, it is assumed that each antenna 204 among the *M* antennas handles the modulation and detection of a single data stream sent to one of the *K* receivers 3, i.e. *M* = *K*.

The information symbol intended to be sent by the base station to the *k*-th receiver 3 is denoted by $s_k$, $\forall k \in K$, and is assumed to be an independent and identically distributed (i.i.d.) random variable with a mean of zero and a variance of one (unit variance).

Furthermore, by superimposing all the signals that propagate through the SIM 25, the composite signal $y_k$ received at the k-th receiver 3 (UE) is expressed as:

$$y_k = h_k^H G \sum_{k'=1}^{K} \sqrt{p_{k'}} s_{k'} w_{k'}^1 + n_k \text{ with } 1 \le k \le K \quad (8)$$

In equation (8), $n_k \sim \mathcal{CN}(0, \sigma_k^2)$ denotes the i.i.d. additive white Gaussian noise with $\sigma_k^2$ being the receiver noise power at the *k*-th user equipment 3.

Considering $P_T$, which denotes the transmit power budget (i.e. maximal transmit power) at the base station 20, and $p_k \ge 0$, which denotes the power allocated to the *k*-th receiver 3 (user equipment) by the base station 20, the sum of the powers over all the *K* receivers 3 meets the power condition (9):

$$\sum_{k=1}^{K} p_k \le P_T \quad (9)$$

The signal-to-interference-plus-noise-ratio (SINR) $\gamma_k$ at the *k*-th receiver 3 is then given by:

$$\gamma_k = \frac{|h_k^H G w_k^1|^2 p_k}{\sum_{k' \ne k} |h_k^H G w_{k'}^1|^2 p_{k'} + \sigma_k^2} \text{ with } 1 \le k \le K \quad (10)$$

The controller 26 is advantageously configured to perform a joint optimization of the power allocation (allocation of the power values $p_k$ to the user equipments 3 at the base station 20) and of the phase shifts $\theta_n^l$ using an online unsupervised dual-task deep-learning neural network, such optimization being adapted to enhance both the downlink (DL) sum rate and the user fairness, so that an overall spectral efficiency is achieved.

As used herein, the sum rate refers to the total achievable data rate (in Bits/second/Hz) from a base station 20 to multiple user devices 3 in a wireless communication system. It is the summation of the individual data rates of all concurrent transmissions to K user devices 3.

According to the embodiments of the disclosure, the controller 26 may comprise an optimization unit 260 using the neural network adapted to jointly optimize online (during the training of the neural network), in parallel and independently (i.e. separately) both the phase shifts $\theta_j^l$ to be imposed to the meta-atoms 2500 of the SIM and the power allocation (powers $p_k$ allocated to the *K* receivers 3) to be applied by the base station 20. As used herein "in parallel and independently" means that the optimization of the two optimization variables (namely the phase shifts and the power allocation) does not require to maximize first only one of the two optimization variables while the other optimization variable is merely calculated from the first determined optimization variable, using an alternating optimization algorithm, as done in the prior art. Indeed, such alternating process used in the prior art might get stuck in local optima, leading to suboptimal overall system performance. Moreover, the iterative nature of alternating between power allocation and phase shifts can result in slow convergence.

The optimization of the phase shifts refers to the optimization of the phase shifts in *G* to maximize the Signal-to-Interference-plus-Noise Ratio (SINR) achieved by the User Equipments (UEs), while mitigating inter-user interference. This approach (which is referred to herein to as the 'wave-based beamforming') involves controlling the phases of the signals at the transmit side to focus the signal power towards the intended users and suppress interference from other users.

Compared with conventional digital beamforming and RIS-aided hybrid active and passive beamforming schemes, the considered wave-based beamforming scheme entails the optimization of a greater number of phase shifts associated with each metasurface layer, which is a more challenging problem to solve.

In some aspects, the optimization unit 260 according to the embodiments of the disclosure uses an online dual-task deep learning approach for joint wave-based beamforming and power allocation scheme.

Since maximizing the sum rate in a multi-user communication system can indeed lead to unfair resource allocation, the optimization unit 260 according to the embodiments of the disclosure is advantageously adapted to balance the sum-rate maximization and fairness among user equipments (receivers 3). Fairness among user equipments refers to the guarantee of a quality of service with a minimum rate among user equipments.

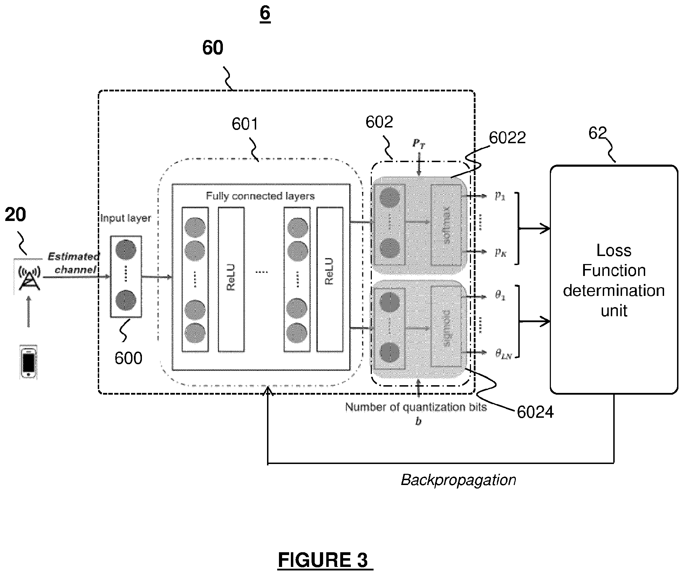

Figure 3 depicts the unsupervised dual-task neural network architecture 6 implemented by the optimization unit 260, according to some embodiments.

The dual-task neural network 6 is adapted to simultaneously optimize the power allocation vector $\boldsymbol{p} = \{p_1,...,p_k\}$ and the phase shifts $\varphi = \{\theta_1,...,\theta_{LN}\}$, in parallel and separately, based on online unsupervised deep learning. The optimized power allocation vector $\boldsymbol{p} = \{p_1,...,p_K\}$ may then be used by the base station 20 to allocate power to each of the K user equipments 3 and the optimized phase shift vector $\varphi = \{\theta_1, ... , \theta_{LN}\}$ may be applied to the meta-atoms 2500 of the SIM 25.

The *k - th* component $p_k$ of the power allocation vector corresponds to the power assigned to the *k*-th user equipment 3. The *i - th* component of the phase shift vector corresponds to the one of the meta-atoms of the *L* metasurface layers of the SIM 25.

The dual-task neural network 6 is configured to receive input data corresponding to estimated channels (also referred to as a 'channel estimation').

The channel estimation refers to the estimation of the characteristics of the channel between the transmitter 2 and each k-th receiver 3, referred to as the channel state information (CSI), which includes information about the amplitude, phase, and frequency of the channels between the base station 20 and receiver 3. In some embodiments, the channel estimation may be determined by the base station 20 based on information obtained using pilot signals (corresponding to predefined reference signals) transmitted by the user equipments 3 to the base station 20 (in the uplink).

In embodiments in which the channel estimation is determined from uplink pilot signals, the base station 20 may determine the channel estimation, such as for example the CSI, by using the pilot symbols that are transmitted by each user equipment 3 to the base station 20. The base station 20 may use various estimation techniques, such as the Least Squares (LS) or the Minimum Mean Square Error (MMSE), to estimate the channel by comparing the received pilot symbols with the known pilot symbols. In embodiments in which the communication system 100 operates in Time Division Duplex (TDD) mode, the base station 20 needs to estimate the channel vectors of its user equipments 3 in each channel coherence block. In such embodiments, the channel estimation may be triggered at the beginning of each coherence block that corresponds to a period within which the channel conditions are assumed to remain relatively stable.

The skilled person will readily understand that the channel estimation (related to the real channel with channel estimation errors) may be determined by applying any suitable technique. For example and without limitations, the channel estimation may be based on the channel estimation technique described in X. Yao, J. An, L. Gan, M. Di Renzo and C. Yuen, "Channel Estimation for Stacked Intelligent Metasurface-Assisted Wireless Networks," in IEEE Wireless Communications Letters, vol. 13, no. 5, pp. 1349-1353, May 2024.

The channel estimation represents data about the current state of the communication channels related to each user equipment 3.

The neural network 6 comprises a set of neural network layers 60.

According to the embodiments of the disclosure, the set of neural network layers comprise:

- an input layer 600 configured to receive the input data applied to the neural network 6 (estimated channels);

- a set of hidden layers 601 (or intermediary layers) which may correspond to fully connected shared layers of neurons;

- a dual task output layer 602 comprising a first output sub-layer 6022 adapted to perform a first task (power allocation task) and a second output sub-layer 6024 configured to perform a second task (phase-shift task optionally followed by quantization).

The hidden layers 601, arranged between the input layer 600 and the output layer 602, are configured to process the input data corresponding to the channel estimation and to extract relevant features that are used for jointly optimizing the power allocation (power allocation vector $p$) and the wave-based beamforming (phase shift vectors $\varphi$) in parallel and separately.

The hidden layers 601 are configured to learn complex patterns in the input data and transform them into a new representation that is easier for the neural network 6 to learn from.

Each layer or sub-layer of the neural network 6 (600, 601, 6022, 6024) is constituted of interconnected nodes, also called neurons (artificial neurons), schematically represented by circular forms. The information received as input by a given neural network layer is processed and passed through the neurons of the layer. Each neuron of a layer applies a transformation to the received input. The successive transformations performed at the successive neural network layers produce an output at the output layer 602.

A neuron in the neural network 6 is characterized by three main components comprising weights, a bias, and an activation function. The weights represent the strength of the connections between the inputs and the neuron, while the bias acts as an additional parameter that shifts the input to the activation function, allowing the neuron to better fit the data. The activation function introduces non-linearity, enabling the network to model complex relationships and patterns in the data. Together, these components determine how a neuron processes its inputs and contributes to the overall learning capability of the network.According to the embodiments of the disclosure, the output produced by the output layer is twofold and comprises an output corresponding to a predicted power allocation

vector $p = \{p_1, ..., p_K\}$ delivered by the first output sub-layer 6022 and an output corresponding to a predicted phase shift vector $\varphi = \{\theta_1,...,\theta_{LN}\}$ delivered in parallel and independently by the second output sub-layer 6024.

The transformations performed by the neurons of the neural layers and sub-layers 600, 601, 6022, 6024 depends on the weights, biases (weights and biases serve as the adjustable parameters in neural networks) and on the activation function associated with each layer or sub-layers.

An activation function introduces non-linearity to the neural network (to modify the spatial representation of the data received by the activation function).

The architecture of the neural network 6 is characterized by its depth corresponding to the number of neuron network layers, its width corresponding to the number of neurons (nodes) on each hidden layer, and its activation functions associated with each layer or sub-layer 600, 6022, 6024.

The activation functions may be different across the layers. As represented in figure 3, the activation functions associated with the hidden layers may be the same while a different activation function for the last output sub-layers 6022 and 6024. The activation function associated with the first output sub-layer 6022 may be different from the activation function associated with the second output sub-layer 6024.

In some embodiments, the activation functions associated with the hidden layers may be the Rectified Linear Unit (ReLU) function or an activation function derived from the ReLU, while the activation function associated with the first output sub-layer 6022 may be the Softmax function, and the activation function associated with the second output sub-layer 6024 may be the sigmoid function.

The choice of activation function depends on the nature of the required output.

In some embodiments, the ReLU activation function may be used for the fully connected layers 601 because it mitigates the vanishing gradient problem, enabling efficient training and effective feature extraction from the input channel data.

At the output sub-layer 6022 (performing the power allocation task), the softmax activation function may be used for power allocation as it produces a normalized probability distribution, ensuring that the allocated powers satisfy the total power constraint.

At the output sub-layer 6024 (performing the phase shift task that may include quantization), the sigmoid activation function may be used because it maps outputs to the range [0,1], allowing easy representation of quantization levels for independent phase shifts.

This combination ensures task-specific performance while maintaining computational efficiency during training.

An ReLU activation function is adapted to mitigate the vanishing gradient problem, thereby allowing the neural network 6 to learn effectively and perform well with deeper architectures.

The basis ReLU function is defined as:

$$ReLU(z) = max\{0, z\} \quad (11)$$

*ReLU(z)* it gives z if z larger than zero or zero otherwise. The ReLU function enables applying a filter at the output of each hidden layer, by passing the positive values while blocking the negative values (thereby only some features of the input features are passed while the other are eliminated).

The softmax function is defined as:

$$Softmax(z) = \frac{exp(z)}{\sum_j exp(z_j)} \quad (12)$$

For each output, the Softmax function provides a result between zero and one.

The sigmoid activation function is defined as:

$$Sigmoid(z) = 1 / (1 + e^{-z}) \quad (13)$$

The sigmoid activation function is defined to generate phase shift values, each being comprised between 0 and $2\pi$.

Each connection between neurons across different layers is associated with a weight. A weight represents the strength or amplitude of the connection between two neurons. Biases, on the other hand, are constants associated with each neuron. Unlike weights, biases are not connected to specific inputs but are added to the neuron's output. Biases introduce a level of adaptability that ensures the network can learn and make predictions. Each neuron is connected to every other neuron of the next layer, which means that its output value becomes the input for the next neurons. According to the embodiments of the disclosure, together, weights and biases in the neural network 6 are learnt during an online training phase based on real-time input data (channel estimations).

Once a neuron receives inputs from all the other neurons connected to it, a bias corresponding to a constant value may be added. A bias is an additional parameter associated with each neuron, added to the weighted sum of inputs before passing the result through the activation function. The biases may be also learnt during the online training.

During the online training, the neural network 6 implements one or more iterations of a forward propagation pass (or 'forward propagation phase') followed by a backward propagation pass (or 'backwardpropagation phase'). An iteration will be also called hereinafter as a 'training iteration'. In online learning, an epoch corresponds to one training iteration.

The forward propagation refers to the process where the input data is passed through the layers of a neural network 6, using the weights and activation functions to compute the output.

During the forward propagation phase, the channel estimation is received in the input layer 600 and propagated successively to the neurons at each hidden layer 601 until the last output sub-layers 6022 and 6024 that finally produce the predicted output vectors in parallel (predicted power allocation vector and predicted phase shift vector).

The forward propagation enables the neural network to transform the channel estimation received by the input layer 600 through its layers, incorporating the weights, the biases, and the activation functions successively.

The backward propagation (also referred to as 'backpropagation') phase refines the neural network's parameters corresponding to the neural network weights to enhance the predictive capabilities using a backpropagation algorithm.

The backpropagation phase comprises determining the loss function $\mathcal{L}$ from the predicted vectors $\boldsymbol{p}$ and $\varphi$ determined by the first output sub-layer 6022 and the second output sub-layer 6024, and then calculating the gradients of the loss function with respect to all the network parameters (weights and biases). The backpropagation may be efficiently handled using deep learning libraries through automatic differentiation.

The backward propagation phase may use a descent gradient algorithm to update the weights from the gradients of the loss function. The descent gradient algorithm may be for example the Stochastic gradient descent (abbreviated as 'SGD') or an extension of the SGD, such as the Adam Optimization algorithm which is a first-order-gradient-based optimization of stochastic objective functions based on adaptive estimates of lower-order moments, as described for example in J. Jiao, X. Sun, L. Fang and J. Lyu, "An overview of wireless communication technology using deep learning," in China Communications, vol. 18, no. 12, pp. 1-36, Dec. 2021, doi: 10.23919/JCC.2021.12.001.

The SGD is an iterative method for optimizing an objective function with suitable smoothness properties. It forms stochastic approximation of gradient descent optimization, since it replaces the actual gradient (calculated from the entire data set) by an estimate of the actual gradient, calculated from a randomly selected subset of the data.

To train the neural network online, the forward propagation is alternated with backpropagation to update the model parameters using gradients given by backpropagation during a number of iterations (training iterations).

In response to the receipt of the output of the last hidden layer 601, the first output sub-layer 6022 is configured to produce an output corresponding to a predicted optimized power allocation vector $p$ using the associated activation function, such as the softmax activation function. The softmax activation function is defined to provide a probability distribution over power levels. This ensures the power values $\boldsymbol{p} = \{p_1, \dots, p_k\}$ are non-negative and sum up to the total power constraint $P_T$.

In response to the receipt of the output of the last hidden layer 601, the second output sub-layer 6024 is configured to produce an output corresponding to a predicted phase shift vector $\varphi = \{\theta_1, \dots, \theta_{LN}\}$ using the associated activation function, in parallel and independently of the first output sub-layer 6022.

The associated activation function 6040 associated with the second output sub-layer 604 may be for example a sigmoid function.

In some embodiments, the second output sub-layer 6024 may be further configured to apply a phase quantization using the q quantization bits to quantize the determined phase shift values into their nearest values in $\mathcal{B}$, which provides quantized phase shifts $\{\theta_1, \dots, \theta_{LN}\}$.

The activation function associated with the second output sub-layer 604 is advantageously selected to be adapted for a phase quantization.

This allows for efficient and accurate phase optimization, a critical factor in wave-based beamforming applications.

To mitigate any potential performance degradation from the quantization process, the neural network 6 may further implements an additional pseudo-inference phase, after the termination of the training iterations, the additional pseudo-inference phase using the neural network parameters (optimal weights) that yielded the highest performance metrics during the training phase (corresponding to the online training iterations where each iteration comprises a forward propagation phase followed by backpropagation phases). By memorizing and preserving these optimal neural network parameter values (optimal weights), the peak capabilities achieved by the model when applying the quantization can be maintained.

According to the embodiments of the disclosure, the neural network 6 uses a novel loss function $\mathcal{L}$ that advantageously combines the objectives of sum rate and minimum rate maximization.

The loss function $\mathcal{L}$ according to the embodiments of the disclosure represents a balance between maximizing the sum rate and maximizing the minimum rate across all user equipments 3 (i.e. maximizing the worst-case user rate), this balance being defined by a balance parameter $\alpha$.

The loss function used by the neural network 6 is determined according to equation (12):

$$\mathcal{L} = -\alpha \sum_{k=1}^{K} \log_2(1 + \gamma_k) - (1-\alpha) \min_k(\log_2(1+\gamma_k)) \quad (14)$$

In equation (12), the sum rate *SUM_RATE* corresponds to the term $\sum_{k=1}^{K} \log_2(1+\gamma_k)$ and the minimum rate *MIN_RATE* corresponds to the term $\min_k \log_2(1 + \gamma_k)$.

The loss function may be therefore rewritten in the form:

$$\mathcal{L} = -\alpha \, SUM\_RATE - (1-\alpha) \, MIN\_RATE \quad (15)$$

The determination of the loss function $\mathcal{L}$ comprises an evaluation of the model's performance over a range of $\alpha$ values and choosing the one that offers the best trade-off between maximizing the sum rate and ensuring fairness among users.

The neural network 6 is advantageously trained online, which means that the model of the neural network 6 is continuously updated with new data as it becomes available. This ensures that the neural network adapts to changing channel conditions and environmental dynamics in real-time.

Multiple iterations of the forward/backward propagation phases may be performed until the loss stabilizes, indicating that the network parameters have converged to optimal values. In online learning, these steps occur for each new data point as it arrives, and the model parameters are updated incrementally.

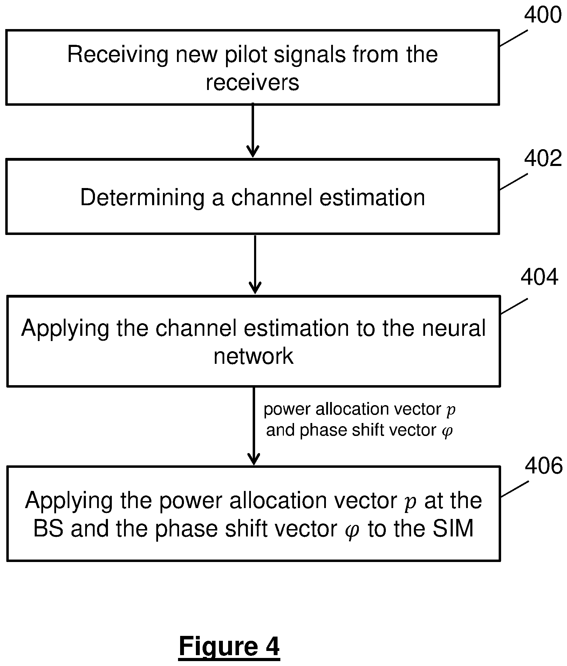

Figure 4 illustrates the main steps of the method for joint control of the power allocation and the phase shifts, according to some embodiments.

In step 400, reference signals (pilots signals) may be received by the base station 20 from all the user equipment 3.

In step 402, the channel estimation is determined from the received reference signal.

In step 404, the channel estimation is applied to the neural network 6 which provides the power allocation vector p and the phase shift vector $\varphi$. In step 406, the phase shift vector is applied to the SIM 25 by the controller 26 to adjust the phase shifts of the EM passing through each meta-atom 2500 of the SIM 25. The power allocation vector p is applied to adjust the power allocation scheme at the base station 20 (power allocated to each receiver 3).

The SIM 25 can then transmit beamforming in the EM wave-domain.

This enables a joint optimization of transmit power allocation at the base station 20 and wave-based beamforming at the SIM 25, thereby maximizing the overall system performance, using the unsupervised and online dual-task deep-learning neural network 6.

A training iteration comprises the following main steps:

- A forward propagation phase in which the input data is passed through the neural network 6, layer by layer, and the neural network model generates its output.

- A Loss calculation phase in which the loss is computed based on the resulting output of the forward propagation phase. This phase may include storing weights if they correspond to the minimal loss function value.

- A backward propagation phase in which the neural network 6 computes the gradients of the loss with respect to the current network parameters (weights, biases). The backward propagation phase may then use a gradient descent algorithm (ADAM) to update the network parameters in the direction that minimizes the loss function.

The forward propagation, loss calculation, and backward propagation phases form the core of neural network training.

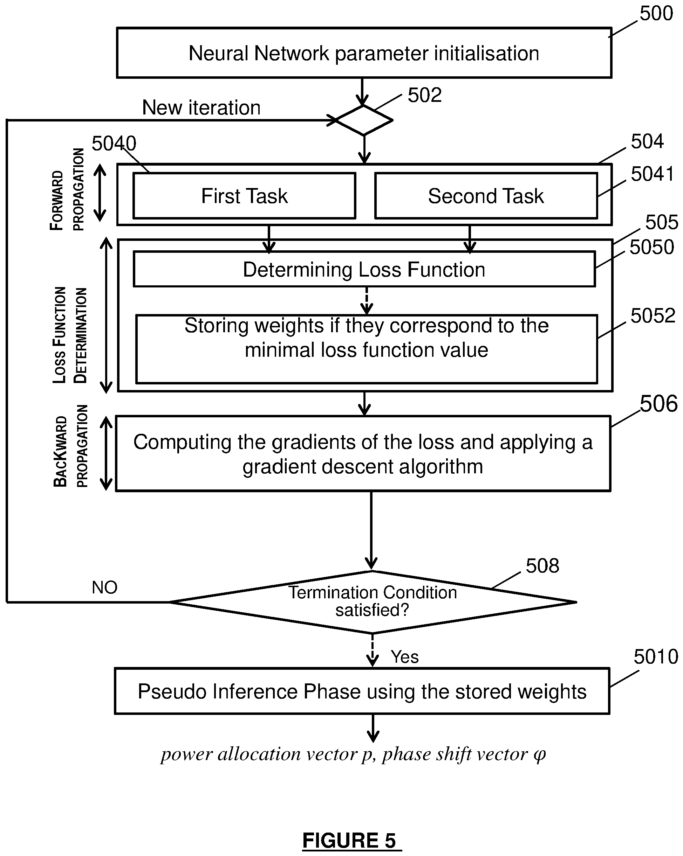

Figure 5 is a flowchart representing the joint determination of the transmit power allocation vector **p** to be applied at the base station 20 and of the phase shift vector $\varphi$ (representing the wave-based beamforming) to be applied to the SIM 25, using the unsupervised and online dual-task deep-learning neural network 6, according to some embodiments.

The SIM-aided communication system 100 advantageously relies on the dual-task output layer 602 that performs two tasks using a same deep learning neural network architecture 60 (hence referred to as a 'dual-task deep learning neural network'). The two neural network tasks are performed by two parts operating in parallel (i.e. simultaneously) and separately (i.e. independently from each other), namely the power allocation output sub-layer 6022 for determining the predicted power allocation vector **p** and the wave-based beamforming output sub-layer 6024 for determining the phase shift vector $\varphi$.

Therefore, the neural network 6 jointly processes:

- the power allocation, in block 6022, in accordance with the transmit power constraint $P_T$ at the base station 20;

- the adjustment of the phase shifts, in block 6024, for all the metasurfaces 250 of the SIM 25, which, in some embodiments, may take into account the quantization bits $q$.

The neural network 6 is unsupervised in that it does not require using a labelled learning data set for learning the neural network model parameters (weights and bias). Further, the neural network 6 is an 'online' neural network performing online learning (i.e. learning is performed in real-time, each time a channel estimation is received at the neural network input) without requiring training the neural network 6 based on previously collected data sets. Accordingly, according to the embodiments of the disclosure, the neural network training is performed 'online' based on the inputs (channel estimation) provided by the input layer 600 based on data received in real time. The neural network 6 is advantageously trained continuously and in real time for each received user equipment channel estimation corresponding to a new channel between the base station 20 and a user equipment 3.

In step 500, the parameters of the model of the neural network 6 are initialised. The neural network model parameters include the weights associated with the connections (links) of the neural network 6.

The parameters of the neural network may be initialized randomly before the training process begins.

The method then comprises one or more iterations (block 502), each iteration comprising a forward propagation pass 504 followed by a backpropagation pass 506.

In the forward propagation pass 504, the input corresponding to the channel estimation, determined by the input layer 600, is passed through the successive hidden layers 601 of the neural network 6 using the current weights of the neural network 6 (in the first iteration the initial weights determined at the initialisation step 700 are used), until the twofold output layer 602 (dual-task output layer) is reached. The twofold output layer 602 then determines in parallel (blocks 5041 and 5042) an output comprising the predicted phase shift vector and the predicted power allocation vector. Each hidden layer 601 receives at its input the output of the previous hidden layer, and incorporates the current weights associated with the layer, the biases, and the associated activation function (e.g. ReLu).

After the forward propagation phase 504, a loss function determination phase 505 is implemented, in which the loss function is computed based on the resulting output of the forward propagation phase 504.

In the loss function determination phase 505, the neural network may determine the loss function (step 5050) from the predicted vectors $p$ and $\varphi$ determined by the first output sub-layer 6022 and the second output sub-layer 6024. The determination of the loss function may further comprise evaluating the neural network model's performance over a range of $\alpha$ values and choosing the one that offers the best trade-off between maximizing the sum rate and ensuring fairness among users.

The value $\alpha$ is predetermined (prior to the execution of the training iterations) so as to ensure an optimal balance between maximizing the sum rate and ensuring fairness among users. For example, in some embodiments, simulations with different values for $\alpha$ may be performed previously (prior to the training iterations) to determine the value $\alpha$ that provides an optimal balance between maximizing the sum rate and ensuring fairness among users. The value $\alpha$ thus predetermined is then used for the training iterations, and during the forward and backward propagation phases.

In the backward propagation (or 'backpropagation') pass 506, the neural network 6 is configured to calculate, in step 506, the gradients of the determined loss function (gradients of the loss with respect to the network parameters), and apply a descent gradient algorithm to update the weights and the biases of the neural network model in the direction that minimizes the loss function.

In each forward propagation phase 504, starting at the input layer 600, data flows through the hidden layers and ultimately reaches the output layer 602.

More specifically, in each forward propagation pass 504 of a given iteration corresponding to a current set of weights and channel estimation input data, in each current hidden layer 601 (between the input layer 600 and the output layer 602):

- The output data of the previous layer is received as input of the hidden layer.

- The weighted sum z of the received inputs and biases is calculated for each neuron of the hidden layer using the current weights associated with the connections of the neuron.

- Following the calculation of the weighted sum z, the activation function associated with the considered hidden layer, such as ReLU, is applied to the weighted sum z.

After the processing of the last hidden layer 601 (preceding the twofold output layer 602), the output of the last hidden layer is forwarded to the dual-task output layer, in the parallel steps 5040 and 5041, where the final twofold output of the neural network 60 is generated, comprising the predicted phase shift vector (resulting from step 5041) and the predicted power allocation vector (resulting from step 5040).

In the dual-task output 602, the first output sub-layer 6022 (also called herein 'power allocation output sub-layer') and the second output sub-layer 6024 (also called herein 'wave-based beamforming output sub-layer') are each configured to repeat the same process as the hidden layers, independently and in parallel, using the output of the last hidden layer, using an associated activation function.

More specifically, the first output sub-layer 6022 implements a first task, in step 5040, comprising:

- receiving the output data of the last hidden layer 601 as input;

- calculating the weighted sum z1 of the received input data and biases for each neuron of the first output sub-layer 6022 using the current weights associated with the connections of its neurons;

- following the calculation of the weighted sum z1, the activation function associated with the first output sub-layer 6022, such as for example the softmax function, is applied, which provides a predicted power allocation vector $\mathbf{p} = \{p_1, ... , p_k\}$ that fulfills the condition related to the total power constraint $P_T$ at the base station 20 (i.e. $\sum_{k=1}^{K} p_k \leq P_T$ ).

It should be noted that the activation functions are not limited to the use of the softmax activation function in the power allocation task (first output sub-layer 6022). However, the use of a softmax activation function in the power allocation task (first output sub-layer 6022) presents particular advantages as it appears to be the more adequate choice due to its natural ability to map outputs to a probability distribution. This ensures that the outputs lie within a range of 0 to 1 and sum to 1, which aligns with the constraints of power allocation.

Alternatively, other activation functions may be used, followed by a normalization step to ensure the outputs are in the desired range, but softmax is particularly well-suited for this scenario. The number of neurons used in the first output sub-layer 602 may be equal to the number of components (i.e. elements) of the power vector, namely K. The output of each neuron of the first output sub-layer 6022 therefore corresponds to one of the component $p_j$ (predicted power component) of the predicted power allocation vector $\mathbf{p}$. Therefore, the first output sub-layer 602 provides, at its output, a vector of size K representing the predicted power vector $\mathbf{p}$ comprising the distribution of the powers $p_k$ allocated to the K receivers, the sum of the powers $p_j$ being inferior to the total power constraint $P_T$.

The second output sub-layer 6024 (wave-based beamforming output sub-layer) implements a second task, in step 5041, executed in parallel and independently of the first task and comprising:

- receiving the output data of the last hidden layer at the input of the second output sub-layer 6024;

- calculating the weighted sum z2 of the received input data and biases for each neuron of the second output sub-layer 6024 using the current weights associated with the connections of the neuron;

- following the calculation of the weighted sum z2, applying the activation function associated with the second output sub-layer 6024, such as for example the sigmoid function, which provides a predicted continuous phase shift vector.

The use of the sigmoid activation function in the phase shift task (second output sub-layer 6024) is particularly advantageous as it is the more adequate choice due to its ability to naturally constrain outputs within a desired range. Specifically, the sigmoid function maps values to a continuous range between 0 and 1, which can then be easily scaled to the feasible phase range of $[0, 2\pi]$. However, the skilled person will readily understand that the embodiments of the disclosure are not limited to the use of the sigmoid activation function in the phase shift task (second output sub-layer 6024). Alternatively, any suitable activation function that constraints the outputs within the feasible range for phase values, typically $[0, 2\pi]$, constrained within the set of quantized values, may be used.

In some embodiments, step 5041 may further comprise applying a quantization operation to the result of the activation function of the second output sub-layer 6022 to quantize the result, using the quantized bits, which provides a predicted quantized phase shift vector $\varphi = \{\theta_1, ... , \theta_{LN}\}$.

The number of neurons used in the second output sub-layer 6022 may be equal to the number of components (i.e. elements) of the phase shift vector $\varphi = \{\theta_1, ... , \theta_{LN}\}$, namely LN, with L being the number of metasurface layers 250, and N being the number of meta-atoms 2500 of each metasurface layer 250 of the SIM 25. The output of each neuron of the second output sub-layer 6022 therefore corresponds to one of the component $\theta_j$ (predicted phase shift component) of the predicted phase shift vector $\varphi$. Therefore, the second output sub-layer 6022 (corresponding to the output of step 5041) provides, at its output, a vector of size LN representing the predicted phase shift vector $\varphi$ comprising phase shifts $\theta_j$.

The loss function determination phase 505 is then executed. In the loss function determination phase 505, the method may comprises computing, at the loss function determination unit 62, in step 5050, the loss function $\mathcal{L}$ defined according to equation (14) and represented by a balance between the sum rate corresponding to the term

$\sum_{k=1}^{K} \log_2(1 + \gamma_k)$ and the minimum rate corresponding to the term $\min_k \log_2(1 + \gamma_k)$, where $\gamma_k$ depends on the power allocation vector **p** and the phase shift vector **φ**, the balance being controlled by the parameter $\alpha$ (also called 'balance parameter').

The backpropagation pass 506 is then executed to update the weights using the loss function value, which includes applying a descent gradient algorithm, such as for example and without limitation a stochastic descent gradient algorithm (e.g. ADAM algorithm) to minimise the determined loss function $\mathcal{L}$. This comprises calculating the gradients of the loss function and using the calculated gradients in the descent gradient algorithm to update the weight/bias parameters of the neural network model.

The step of applying a descent gradient algorithm is done once for the two output layers 6022 and 6024. The loss is calculated based on the predicted power vector and the predicted phase shifts, and then, the descent gradient algorithm (for example ADAM algorithm) is performed to update the model parameters.

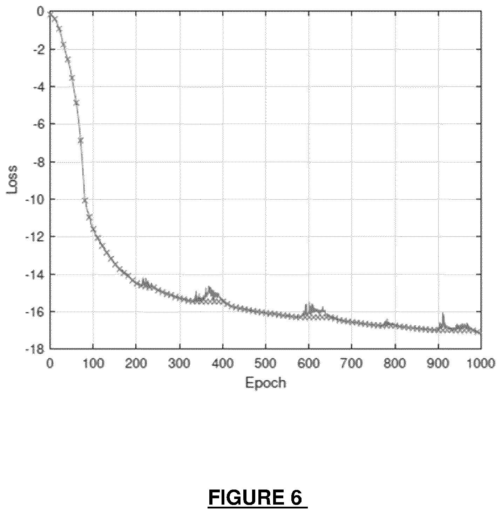

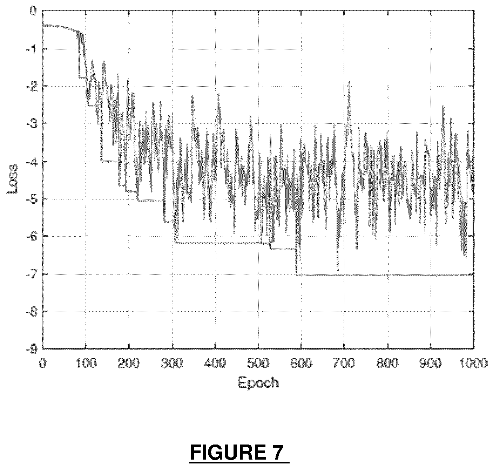

Figure 6 illustrates the Loss convergence behavior for a continuous phase shifts case while figure 7 illustrates the Loss convergence behavior for a discrete phase shifts case (quantized phase shifts by applying a quantization using the $q$ quantization bits to quantize the determined phase shift values into their nearest values in $\mathcal{B}$).

Figures 6 and 7 corresponds to an exemplary case with the number of receivers K = 4, the number of metasurface layers L = 5, the number of meta-atomes N = 49, $\alpha$ = 0,2 and the number of control bits q = 2.

It can be observed that the convergence of the loss function might differ significantly between considering continuous or quantized phase shifts, as represented by the diagrams of figures 6 and 7. With continuous phase shifts, the optimization landscape is smooth, allowing gradient-based methods to effectively minimize the loss function, typically resulting in faster and more stable convergence. In contrast, quantized phase shifts may introduce discrete constraints, leading to a non-smooth optimization landscape with discontinuities.

As a result, this might make the gradient information less informative and the optimization process more challenging.

The method may implement a mechanism to save the network weights at the minimum loss during the training iterations to address the challenges related to the quantized phase shifts. This approach ensures that the model retains its best-performing configuration, even if subsequent training iterations fail to improve the loss due to the non-smooth optimization landscape introduced by quantization.

In some aspects, to ensure the best possible performance in the inference step despite the challenges introduced by quantizing phase shifts, in the embodiments where a

quantization is applied to determine quantized phase shifts, in the second output sub-layer 6024, the model weights corresponding to the minimum loss $\mathcal{L}$ achieved may be stored during the online training of the neural network 60.

This enables tracking the minimum loss encountered during the online training process.

In such embodiments, in response to the step 5050 of computing the loss function, at the loss function determination unit 62, the current weight parameters may be stored (for example, in any suitable memory of the neural network architecture 6), in step 5052, if it is determined that they correspond to the minimum loss function.

The iterations (online training iterations) corresponding to a forward propagation pass followed by a backpropagation pass may be repeated until a termination condition is satisfied (step 508).

In some embodiments, the termination condition may be satisfied if the number of executed iterations (each corresponding to a forward propagation pass followed by a backpropagation pass) reaches a predefined or a predetermined iteration threshold T (representing the maximal number of executed iterations). The iteration threshold may be relatively large (for example equal to 1000 iterations).

The skilled person will readily understand that the invention is not limited to such termination conditions (used in step 508) and that other termination condition may be used, such as a Custom Stopping Criteria used to stop training early when a custom criterion is met.

In response to the termination of the online training iterations of the forward propagation/backpropagation passes (verification of the termination condition in step 508), the method may then comprise an additional iteration, corresponding to a pseudo-inference phase, in step 5010, to ensure that the model uses the best-performing parameters comprising:

- a step of downloading the saved weights corresponding to the minimum loss and use it to predict or extract optimal power allocation and phase shifts;

- a step of performing a pseudo inference phase by applying the received input data to the neural network 60 (trained in the previous phases) using the downloaded saved weights as the neural network model. This pseudo inference phase may be implemented by charging the saved weights (those which provided the minimum loss function), once at the first receipt of a new channel estimation at the input of neural network.

The neural network model corresponding to the minimum loss is thereby used to generate the predicted phase shifts and power allocations, while ensuring that the applied model parameters are those that achieve the best performance during training iterations.

It should be noted that in the online learning according to the embodiments of the disclosure, the neural network model may retrained during each coherence block, adapting its parameters to the current channel estimation. This approach ensures that the predictions for phase shifts and power allocations remain optimized for the time-varying channel conditions.

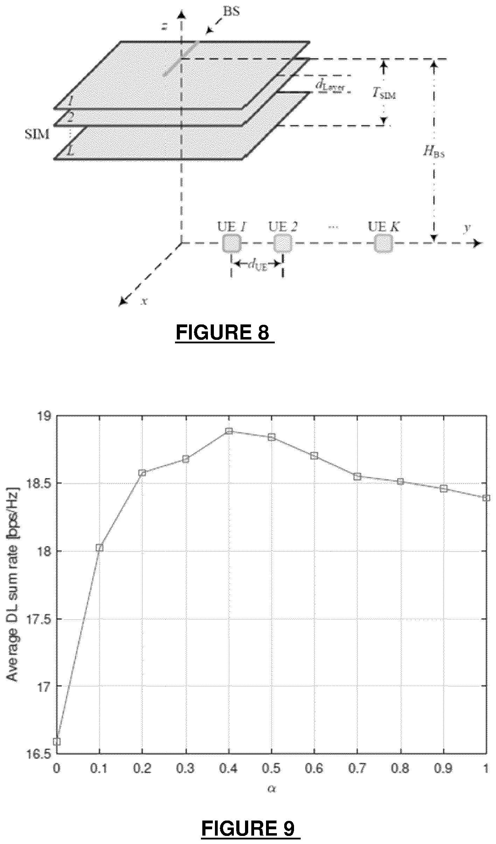

Figure 8 illustrates an exemplary SIM-assisted communication system 100 being a SIM-assisted multiuser MISO downlink system, represented in a referential (X,Y,Z) comprises three perpendicular axis X (also denoted 'x-axis'), Y (also denoted 'y-axis'), and Z (also denoted 'z-axis').

As shown, the base station 20 is equipped with a uniform linear array comprising the M antennas 204, which are arranged parallel to the x-axis. A technique involving SIM stacking of multiple metasurfaces may be implemented within the base station 20 to facilitate transmit beamforming in the EM wave-domain.

Each metasurface layer 250 consists of a uniform planar array where meta-atoms are arranged parallel to the x-y plane. In figure 8, the center of each antenna of the base station 20 and of each meta-atom 2500 of the metasurfaces 250 is positioned along the z-axis. The height of the base station is denoted $H_{BS}$. The thickness of the SIM 25 is denoted $T_{SIM}$. For example, the height $H_{BS}$ of the base station 20 may be equal to 10 m, and the thickness $T_{SIM}$ of the SIM 25 may be equal to $5\lambda$.

The inter layer spacing $d_{layer}$ between adjacent metasurfaces 250 in a L-layer SIM 25 is defined as:

$$d_{layer} = \frac{T_{SIM}}{L} \quad (16)$$

Assuming that each metasurface 250 comprises $N_x$ meta-atoms 2500 along the x-axis and $N_y$ meta-atoms 2500 along the y-axis, the total number N of meta-atoms 2500 in each layer is denoted as $N = N_x \times N_y$.

For the sake of simplification, a square metasurface structure is considered so that $N_x = N_y$, in the following description, although the skilled person will readily understand that the disclosure also applies to a rectangular metasurface structure ($N_x \neq N_y$).

It is further assumed that there is a half-wavelength spacing $(\frac{\lambda}{2})$ between adjacent antennas of the base station 20 and between or between the meta-atoms 2500 of the metasurface layers 250. The size of each meta-atom 2500 is then equal to $d_x = d_y = \frac{\lambda}{2}$ .

Additionally, it is considered that the user equipments (receivers 3) are evenly distributed along the y-axis with a spacing $d_{UE}$. The exemplary value of $d_{UE}$ = 10 m will be considered hereinafter.

Each transmit antenna 204 at the base station 20 has an antenna gain. For the sake of illustration, it will be considered that the antenna gain of each transmit antenna 204 is equal to 5 dBi, while each user equipment 3 is equipped with a receiver antenna having an antenna gain equal to 0 dBi antenna.

The distance-dependent path loss is modelled as $\beta_k = C_0 d_k^{-\mu}$ , where $C_0$ is the free space path loss at the reference distance of 1 m, and $\mu$ is the path loss exponent. Considering that the carrier frequency is 28 GHz, $C_0$ = -60 dB and $\mu$ = 3.5. Additionally, the noise power is:

$$\sigma_k^2 = -104 \text{ dBm},$$

$\forall k$, with $1 \leq k \leq K$.

Figure 9 represents the average sum rate versus $\alpha$ obtained for the considered exemplary use case with the number of receivers K = 4, the number of metasurface layers L = 5, the number of meta-atomes N = 49, $\alpha$ varying from 0 to one with a step 0.1, and the number of control bits q = 2.

The diagram of figure 9 shows that there is an optimal balance between sum rate maximization and user fairness around a value of $\alpha$ equal to $\alpha$ = 0.4 where the average Downlink sum rate is maximized. Extreme values of $\alpha$, either focusing entirely on fairness (i.e., $\alpha$ = 0) or sum rate maximization (i.e., $\alpha$ = 1), lead to suboptimal performance.

This indicates that prioritizing sum rate maximization without considering fairness would lead to suboptimal resource allocation, where the system might heavily favor user equiments 3 with good channel conditions at the expense of other user equipments 3. However, the average sum rate is relatively low, around 16.5 bps/Hz, when $\alpha$ = 0. This is explained by the fact that, with $\alpha$ = 0, the optimization focuses solely on fairness, ensuring that the user with the worst channel conditions gets a fair share of resources, which can significantly reduce the overall sum rate.

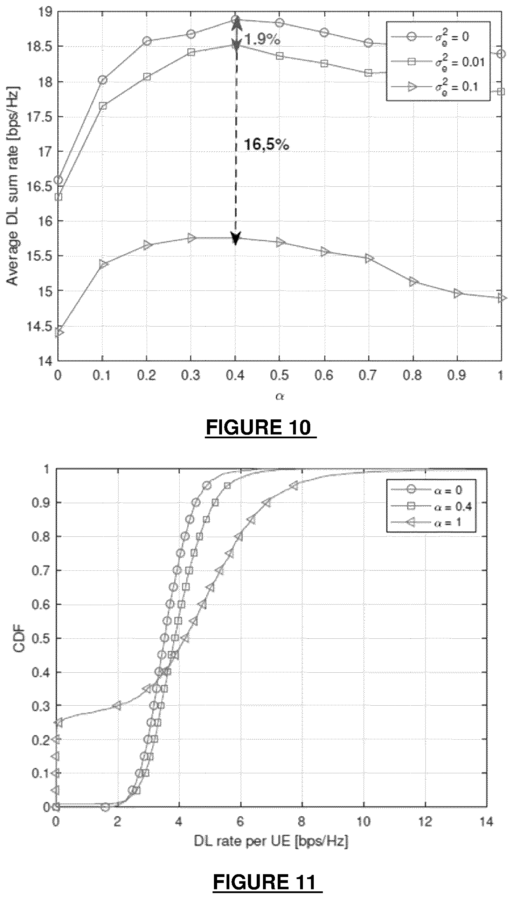

Figure 10 illustrates the impact of channel estimation error, $\sigma_e^2$ on the average Downlink sum rate for different values of $\alpha$, obtained for the considered exemplary use case (with the number of receivers K = 4, the number of metasurface layers L = 5, the number of meta-atomes N = 49, $\alpha$ varying from 0 to one with a step 0.1, and the number of control bits q = 2). As shown, as the channel estimation error increases, the average sum rate decreases for all values of $\alpha$. The degradation is more pronounced with larger estimation errors, highlighting the importance of accurate channel estimation for achieving high sum rates. Despite the degradation due to estimation errors, the optimal value of $\alpha$ remains around 0.4 for all levels of $\sigma_e^2$.

Figure 11 represents the cumulative distribution function (CDF) of the Downlink rate per user for different values of $\alpha$, obtained for a use case in which K = 4, L = 5, N = 49, and q = 2. As illustrated, when $\alpha$ = 0, the minimum rate, at CDF = 0, is around 2 bps/Hz, which indicates that even the worst-off user equipment achieves a relatively high rate. Most user equipments 3 have rates clustered around 4-6 bps/Hz, with a very small variation, indicating strong fairness. On the other hand, when $\alpha$ = 1, 25% of the K user equipments 3 are not served, indicating that some user equipments 3 experience very low rates. User equipments 3 achieve a broad range of rates, with some reaching up to 8-10 bps/Hz, showing a focus on maximizing the total sum rate with less regard for fairness. When $\alpha$ = 0.4, the rate distribution is more spread out compared to $\alpha$ = 0. Users achieve a wider range of rates, with some reaching up to around 7 bps/Hz, indicating a balance between fairness and sum-rate maximization.

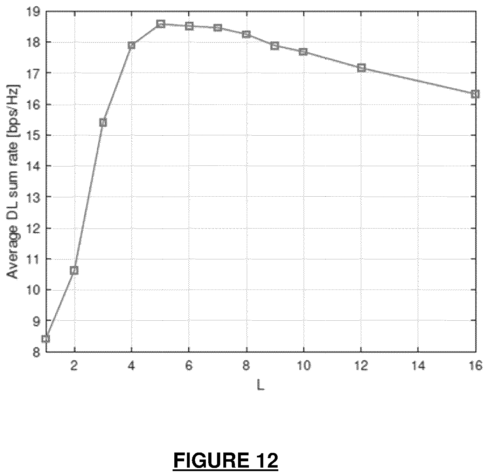

Figure 12 shows the relationship between the average DL sum rate (in bps/Hz) and the number L of metasurface layers 250 in the SIM 25, obtained for a use case where K = 4, N = 49, $\alpha$ = 0,2 and b = 2.

The SIM 25 has an optimal number L of metasurface layers 250 to balance the improvements in signal gain and interference management. Further, the gains from adding more elements start to diminish.

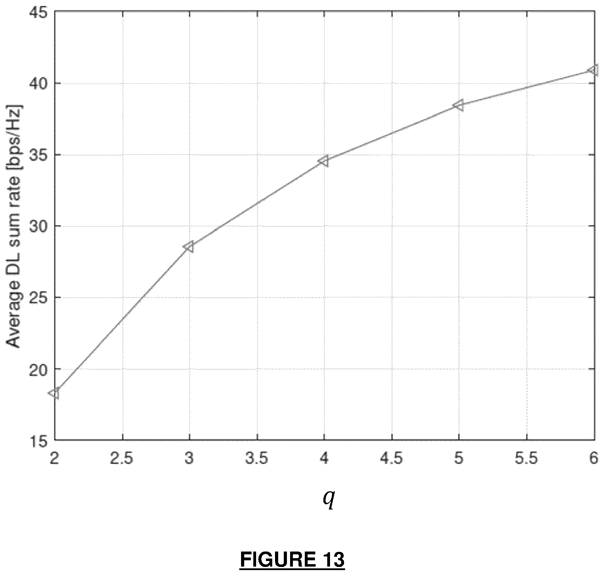

Figure 13 depicts the average DL sum rate versus the number of quantization bits q obtained by considering $K$ = 4, $L$ = 7, $N$ = 49, and $\alpha$ = 0,2. The diagram of figure 13 shows a substantial increase in the average Downlink sum rate from about 20 bps/Hz at $q$ = 2 to around 40 bps/Hz at $q$ = 6. Using more control bits q may enable improving performance.

By leveraging SIM technology, the SIM-assisted communication system 100 according to embodiments of the disclosure enable achieving unprecedented control over electromagnetic waves, leading to enhanced system performance by jointly optimizes phase shifts and power allocation using neural networks, and an improved online unsupervised approach.

The embodiments of the disclosure demonstrated superior performance in multi-user beamforming scenarios. As illustrated by the simulation results represented in figures 9 to 13, they provide substantial improvements in average downlink sum rates, highlighting the benefits of precise phase shift quantization and the importance of channel state information accuracy.

They exploit the transformative potential of SIMs in wireless communication, thereby obtaining a robust solution to the challenges of multi-user interference and resource allocation.

The SIM-assisted communication system 100 according to embodiments of the disclosure advantageously enables balancing the maximization of the sum rate with ensuring a fair distribution of resources by considering the minimum rate per user.

This allows for a trade-off between achieving high aggregate data rates and maintaining acceptable quality of service for individual users.

It should be noted that the online DNN-based approach according to the embodiments of the disclosure may be used more generally to solve general optimization problems in wireless communications by leveraging the fast and universal applications of gradient descent and automatic differentiation to streamline the calculation of gradients.

In some aspects, an optimal number of SIM metasurface layers 250 may be used to balance performance gains and complexity.

The embodiments of the disclosure may be used in various applications, such as in wireless terrestrial or non-terrestrial systems, to reduce RF-related energy consumption and processing delays.

The devices, methods, and computer program products described herein may be implemented by various means. For example, these techniques may be implemented in hardware, software, or a combination thereof.

Furthermore, the method described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

**Claims**

1. A transmitter (2) comprising a base station (20) equipped with a plurality of antennas (204) configured to transmit a signal to a number of user equipments (3), each comprising at least one antenna, wherein the transmitter (2) further comprises Stacked Intelligent Metasurfaces, SIM (25), wherein the transmitter comprises a controller (26) configured to jointly control the phase shifts of electromagnetic waves passing through meta-atoms of the SIM (25) and the power allocated by the base station (20) to each user equipment (3), using an online dual-task deep-learning neural network (6), wherein the controller (26) is configured to implement one or more iterations, each iteration comprising a forward propagation pass (504) and a backpropagation pass (506),

   wherein in the forward propagation pass (504), input data corresponding to an online channel estimation related to the state of the channels between each user equipment (3) and the base station (20) is passed through successive hidden layers (600, 601) of the neural network (6) using current weights and an activation function associated with each hidden layer of the neural network (6), until the output of the last hidden layer is transmitted to a dual-task output layer (602) comprising a first output sub-layer (6022) and a second output sub-layer (6024), wherein the first output sub-layer (6020) is configured to determine a predicted phase shift vector, in response to the receipt of the output of the last hidden layer, and the second output sub-layer is configured to determine a predicted power allocation vector, in response to said receipt of the output of the last hidden layer, in parallel to the first output sub-layer,
   wherein the transmitter is configured to determine of a loss function (505) from the predicted vectors determined by the first output sub-layer (6022) and the second output sub-layer (6024),
   wherein the backward propagation pass (506) comprises an application of a descent gradient algorithm using calculated gradients of the loss function to update the weights of the neural network model,
   wherein the controller (26) is configured to apply a phase shift vector to the SIM meta-atoms (2500) using the predicted phase shift vector determined at the last iteration, and to control the power allocated by the base station to each user equipment using the predicted power allocation vector determined at the last iteration.

2. The transmitter of claim 1, wherein each layer of the neural network (6) comprises a set of connected neurons and is associated with an activation function, and wherein in each forward propagation pass (504) of a given iteration corresponding to a current set of weights and channel estimation input data, each hidden layer (601) is configured to:

   - receive the output data of the previous layer as the input data of the hidden layer;
   - determine the weighted sum of the received input data and biases for each neuron of the hidden layer using the weights, among said current set of weights, that are associated with the connections of the neuron;
   - apply the activation function associated with the layer or sub-layer to the determined weighted sum.

3. The transmitter of any preceding claim, wherein the first output sub-layer (6022, 6024) of the neural network (6) comprises a set of connected neurons and is associated with an activation function, and wherein the first output sub-layer (6022) is configured to:

   - receive the output data of the last hidden layer (601) as input data;
   - calculate the weighted sum of the received input data and biases for each neuron of the first output sub-layer (6022) using the weights, among said current set of weights, that are associated with the connections of the neurons of the first output sub-layer (6022);
   - apply the activation function associated with the first output sub-layer (6022), which provides a predicted power allocation vector $p = \{p_1, \ldots, p_k\}$ such that the sum of the component of the power allocation vector is inferior or equal to the total power constraint $P_T$ at the base station (20), each component of the predicted power allocation vector $p = \{p_1, \ldots, p_k\}$ corresponding to a user equipment (3).

4. The transmitter of claim 3, wherein the activation function associated with the output sub-layer (6022) is the softmax function.

5. The transmitter of any preceding claim 3 and 4, wherein the number of neurons of the first output sub-layer (602) is equal to the number of components of the power vector, the output of each neuron of the first output sub-layer (6022) corresponding to one of the component of the predicted power allocation vector p.

6. The transmitter of any preceding claim, wherein the second output sub-layer (6022, 6024) of the neural network (6) comprises a set of connected neurons and is associated with an activation function, and wherein the second output sub-layer (6024) is configured to:

- receive the output data of the last hidden layer as input data;
- determine the weighted sum of the received input data and biases for each neuron of the second output sub-layer (6022) using the weights, among said current set of weights, that are associated with the connections of the neuron;
- apply an activation function associated with the second output sub-layer (6022), which provides a predicted continuous phase shift vector.

7. The transmitter of any preceding claim, wherein the second output sub-layer (6024) is further configured to apply a quantization operation to said predicted continuous phase shift vector, using quantized bits, which provides a predicted quantized phase shift vector $\varphi = \{\theta_1, ..., \theta_{LN}\}$.

8. The transmitter of any preceding claim 6 and 7, wherein the activation function associated with the second output sub-layer (6022) is the sigmoid function.

9. The transmitter of any preceding claim 6 to 8, wherein the SIM comprises a plurality of metasurface layers, each metasurface layer (250) comprising a plurality of meta-atoms (2500), and wherein the number of neurons of the second output sub-layer (6022) is equal to the number LN of components of the phase shift vector $\varphi = \{\theta_1, ..., \theta_{LN}\}$, with L being the number of metasurface layers (250) of the SIM and N being the number of meta-atoms (2500) of each metasurface layer (250), the output of each neuron of the second output sub-layer (6022) corresponding to one of the meta-atom (2500) of the SIM (25).

10. The transmitter of any preceding claim, wherein the loss function represents a balance between maximizing the sum rate and maximizing the minimum rate across all user equipments (3), said balance being defined by a balance parameter ($\alpha$).

11. The transmitter of claim 10, wherein the sum rate is defined by the term $\sum_{k=1}^{K} \log_2(1 + \gamma_k)$ and the minimum rate across all user equipments (3) is defined by the term $\min_k \log_2(1 + \gamma_k)$, where $\gamma_k$ represents the signal-to-interference-plus-noise-ratio (SINR) at the k-th user equipment (3), and depends on the predicted vectors determined by the first output sub-layer (6022) and the second output sub-layer (6024).

12. The transmitter of any preceding claim 10 and 11, wherein the loss function is defined as: $\mathcal{L} = -\alpha \sum_{k=1}^{K} \log_2(1 + \gamma_k) - (1 - \alpha) \min_k(\log_2(1 + \gamma_k))$ , where the index $k$ corresponds to the k-th user equipment (3), the term $\sum_{k=1}^{K} \log_2(1 + \gamma_k)$ corresponds to the sum rate and the term $\min_k \log_2(1 + \gamma_k)$ corresponds the minimum rate, and $\gamma_k$ is the signal-to-interference-plus-noise-ratio (SINR) at the k-th user equipment (3).

13. The transmitter of any preceding claim, wherein the descent gradient algorithm is a stochastic descent gradient algorithm.

14. The transmitter of claim 7, wherein, in response to the determination of the loss function, the current weights of the neural network (6) are stored, if it is determined that they correspond to the minimum loss function.

15. The transmitter of claim 13, wherein said iterations comprise a set of online training iterations that are terminated in response to the verification of a termination condition, and wherein in response to the termination of the training iterations, the neural network (6) is configured to:

- download the stored weights corresponding to the minimum loss, and
- perform an additional iteration, corresponding to a pseudo inference phase, by using the downloaded stored weights as the current weights of the neural network.

16. The transmitter of claim 14, wherein the termination condition is satisfied if a predetermined or predefined maximum number of iterations is reached.

**FIGURE 1**

<u>2</u>

**FIGURE 2**

**FIGURE 3**

```
┌─────────────────────────────────────────────────┐  400
│         Receiving new pilot signals from the     │ ⟋
│                    receivers                      │
└─────────────────────────────────────────────────┘
                        │
                        ▼
┌─────────────────────────────────────────────────┐  402
│          Determining a channel estimation        │ ⟋
└─────────────────────────────────────────────────┘
                        │
                        ▼
┌─────────────────────────────────────────────────┐  404
│     Applying the channel estimation to the neural │ ⟋
│                    network                        │
└─────────────────────────────────────────────────┘
                        │  power allocation vector $p$
                        │  and phase shift vector $\varphi$
                        ▼
┌─────────────────────────────────────────────────┐  406
│   Applying the power allocation vector $p$ at the │ ⟋
│   BS and the phase shift vector $\varphi$ to the SIM │
└─────────────────────────────────────────────────┘
```

**Figure 4**

**FIGURE 5**

**FIGURE 6**

**FIGURE 7**

**FIGURE 8**

**FIGURE 9**

**FIGURE 10**

**FIGURE 11**

**FIGURE 12**

**FIGURE 13**

Europäisches
Patentamt
European
Patent Office
Office européen
des brevets

# EUROPEAN SEARCH REPORT

**Application Number**

EP 24 30 7093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DONATELLA DARSENA ET AL: "Design of stacked intelligent metasurfaces with reconfigurable amplitude and phase for multiuser downlink beamforming", ARXIV.ORG, CORNELL UNIVERSITY LIBRARY, 201 OLIN LIBRARY CORNELL UNIVERSITY ITHACA, NY 14853, 29 August 2024 (2024-08-29), XP091862761, * the whole document * | 1-16 | INV. H04B1/04 G06N3/048 G06N3/084 H04B7/06 H04L25/02 |
| A | US 2022/247460 A1 (REKAYA GHAYA [FR] ET AL) 4 August 2022 (2022-08-04) * paragraph [0034] - paragraph [0041] * * paragraph [0069] - paragraph [0075] * * paragraph [0137] - paragraph [0174] * * paragraph [0191] - paragraph [0206] * | 1-16 | |

**TECHNICAL FIELDS SEARCHED (IPC)**

H04B
H04L
G06N

The present search report has been drawn up for all claims

| Place of search | Date of completion of the search | Examiner |
|---|---|---|
| Munich | 16 May 2025 | Galli, Paolo |

EPO FORM 1503 03.82 (P04C01)

## EP 4 761 121 A1

## ANNEX TO THE EUROPEAN SEARCH REPORT
## ON EUROPEAN PATENT APPLICATION NO.

EP 24 30 7093

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | Publication date | Patent family member(s) | Publication date |
|---|---|---|---|
| US 2022247460 A1 | 04-08-2022 | CN 114051701 A | 15-02-2022 |
| | | EP 3761238 A1 | 06-01-2021 |
| | | JP 2022537979 A | 31-08-2022 |
| | | KR 20220031624 A | 11-03-2022 |
| | | US 2022247460 A1 | 04-08-2022 |
| | | WO 2021001202 A1 | 07-01-2021 |

EPO FORM P0459

For more details about this annex : see Official Journal of the European Patent Office, No. 12/82

33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *IEEE Transactions on Communications*, 2024, 1-1
- **ANASTASIOS PAPAZAFEIROPOULOS ; JIANCHENG AN ; PANDELIS KOURTESSIS ; THARMALINGAM RATNARAJAH ; SYMEON CHATZINOTAS**. Achievable rate optimization for stacked intelligent metasurface-assisted holographic mimo communications.. *arXiv*, 2024
- **JIANCHENG AN ; CHAU YUEN ; CHAO XU ; HONGBIN LI ; DERRICK WING KWAN NG ; MARCO DI RENZO ; MEROUANE DEBBAH ; LAJOS HANZO**. Stacked intelligent metasurface-aided mimo transceiver design.. *IEEE Wireless Communications*, 2024, 1-9
- **SHINING LIN ; JIANCHENG AN ; LU GAN ; MÉROUANE DEBBAH ; CHAU YUEN**. Stacked intelligent metasurface enabled LEO satellite communications relying on statistical csi.. *IEEE Wireless Communications Letters*, 2024, vol. 13 (5), 1295-299
- **NAVEED UI HASSAN ; JIANCHENG AN ; MARCO DI RENZO ; MÉROUANE DEBBAH ; CHAU YUEN**. Efficient beamforming and radiation pattern control using stacked intelligent metasurfaces.. *IEEE Open Journal of the Communications Society*, 2024, vol. 5, 599-611
- **JIANCHENG AN ; MARCO DI RENZO ; MÉROUANE DEBBAH ; CHAU YUEN**. Stacked intelligent metasurfaces for multiuser beamforming in the wave domain. *ICC 20203 - IEEE International Conference on Communications*, 2023, 2834-2839
- **JIANCHENG AN ; CHAO XU ; DERRICK WING KWAN NG ; GEORGE C. ALEXANDROPOULOS ; CHONGWEN HUANG ; CHAU YUEN ; LAJOS HANZO**. Stacked intelligent metasurfaces for efficient holographic mimo communications in 6g.. *IEEE Journal on Selected Areas in Communications*, 2023, vol. 41 (8), 2380-2396
- **XING LIN ; YAIR RIVENSON ; NEZIH T. YARDIMCI ; MUHAMMED VELI ; YI LUO ; MONA JARRAHI ; AYDOGAN OZCAN**. All-optical machine learning using diffractive deep neural networks.. *Science*, 2018, vol. 361 (6406), 1004-1008
- **X. YAO ; J. AN ; L. GAN ; M. DI RENZO ; C. YUEN**. Channel Estimation for Stacked Intelligent Metasurface-Assisted Wireless Networks. *IEEE Wireless Communications Letters*, May 2024, vol. 13 (5), 1349-1353
- **J. JIAO ; X. SUN ; L. FANG ; J. LYU**. An overview of wireless communication technology using deep learning. *China Communications*, December 2021, vol. 18 (12), 1-36